(19) **Europäisches Patentamt**
**European Patent Office**
**Office européen des brevets**

(11) **EP 3 525 461 A1**

(12) **EUROPEAN PATENT APPLICATION**

(43) Date of publication:
**14.08.2019 Bulletin 2019/33**

(51) Int Cl.:
**H04N 19/117** $^{(2014.01)}$ **H04N 19/157** $^{(2014.01)}$
**H04N 19/176** $^{(2014.01)}$ **H04N 19/82** $^{(2014.01)}$

(21) Application number: **18305145.7**

(22) Date of filing: **12.02.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **InterDigital VC Holdings, Inc.
Wilmington, Delaware 19809 (US)**

(72) Inventors:
• **GALPIN, Franck**
**35576 Cesson-Sévigné Cedex (FR)**
• **RACAPE, Fabien**
**35576 Cesson-Sévigné Cedex (FR)**
• **DE LAGRANGE, Philippe**
**35576 Cesson-Sévigné Cedex (FR)**

(74) Representative: **Huchet, Anne et al
InterDigital CE Patent Holdings
20, rue Rouget de Lisle
92130 Issy-les-Moulineaux (FR)**

(54) **ADAPTIVE LOOP FILTERING**

(57)     A method for decoding a picture block is disclosed. To this aim, a picture part is decoded (S220). Then, the decoded block is first filtered (S230) with a deblocking filter. At least one sample of the decoded block is classified (S240) into one current class of N classes of an adaptive loop filter, N being an integer. Finally, the sample of the decoded block is filtered (S250) with an adaptive loop filter associated with the current class. Advantageously, the filtering with an adaptive loop filter is weighted responsive to the current class and further to information derived from the filtering with a deblocking filter.

```
                    ┌─────────────┐
                    │    Start    │  S200
                    └──────┬──────┘
                           │                   S210
                    ┌──────▼──────────────┐
                    │ accessing a bitstream│
                    └──────┬──────────────┘
                           │                   S220
                    ┌──────▼──────────────┐
                    │ decoding a part of  │
                    │    a picture        │
                    └──────┬──────────────┘
                           │                   S230
                    ┌──────▼──────────────┐
                    │ filtering the decoded│
                    │ picture part with a │
                    │  deblocking filter  │
                    └──────┬──────────────┘
                           │                   S240
                    ┌──────▼──────────────┐
                    │ classifying at least│
                    │ one sample of the   │
                    │ filtered picture    │
                    │ part into one class │
                    │ (named current      │
                    │ class) of N ALF     │
                    │ classes             │
                    └──────┬──────────────┘
                           │
                    ┌──────▼──────────────┐
                    │ filtering the sample│
                    │ with an ALF filter  │
                    │ associated with the │  S250
                    │ current class,      │
                    │ wherein said        │
                    │ filtering with an   │
                    │ ALF filter is       │
                    │ weighted responsive │
                    │ to the current class│
                    │ and further to      │
                    │ information derived  │
                    │ from the filtering  │
                    │ with a deblocking   │
                    │ filter              │
                    └──────┬──────────────┘
                           │                   S280
                    ┌──────▼──────┐
                    │     end     │
                    └─────────────┘
```

FIGURE 22

**Description**

## 1. TECHNICAL FIELD

The present embodiments generally relate to methods and devices for picture encoding and decoding, and more particularly, to methods and devices for picture encoding and decoding with in-loop filter(s), e.g. with a deblocking filter.

## 2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. To reconstruct the video, the compressed data is decoded by inverse processes corresponding to the prediction, transform, quantization and entropy coding.

Traditional video coding scheme includes in-loop filtering processes for improving the quality of the reconstructed images. In-loop filtering may comprise several filtering processes such as bilateral filtering, Deblocking Filtering (DBF), Sample Adaptive Offset (SAO) filtering as in HEVC, and/or Adaptive Loop Filtering (ALF) such as Wiener filters. These filters may be applied successively in this order or in a different order. However, they may interact incorrectly with one another. Indeed, applying DBF, SAO and ALF may be less efficient than applying only SAO and ALF.

## 3. BRIEF SUMMARY

A decoding method is disclosed that comprises:

- decoding a part of a picture;
- filtering the decoded picture part with a deblocking filter;
- classifying at least one sample of the filtered picture part into one of N classes of an adaptive loop filter, N being an integer;
- filtering the at least one sample with an adaptive loop filter associated with the class to which the at least one sample belongs, called current class, wherein the filtering with an adaptive loop filter is weighted responsive to the current class and further to information derived from the filtering with a deblocking filter.

An encoding method is disclosed that comprises:

- encoding and reconstructing a part of a picture ;
- filtering the reconstructed picture part with a deblocking filter;
- classifying at least one sample of the filtered picture part into one of N classes of an adaptive loop filter, N being an integer;
- filtering the at least one sample with an adaptive loop filter associated with the class to which the at least one sample belongs, called current class, wherein the filtering with an adaptive loop filter is weighted responsive to the current class and further to information derived from the filtering with a deblocking filter.

A bitstream formatted to include encoded data representative of a picture part, the encoded data encoded according to the encoding method according to any one of the embodiments disclosed.

A decoding device is disclosed that comprises:

- means for decoding a part of a picture;
- means for filtering the decoded picture part with a deblocking filter;
- means for classifying at least one sample of the filtered picture part into one of N classes of an adaptive loop filter, N being an integer;
- means for filtering the at least one sample with an adaptive loop filter associated with the class to which the at least one sample belongs, called current class, wherein filtering with an adaptive loop filter is weighted responsive to the current class and further to information derived from the filtering with a deblocking filter.

An encoding device is disclosed that comprises:

- means for encoding and for reconstructing a part of a picture ;
- means for filtering the reconstructed picture part with a deblocking filter;
- means for classifying at least one sample of the filtered picture part into one of N classes of an adaptive loop filter, N being an integer;
- means for filtering the at least one sample with an adaptive loop filter associated with the class to which the at least one sample belongs, called current class, wherein filtering with an adaptive loop filter is weighted responsive to the current class and further to information derived from the filtering with a deblocking filter.

A decoding device comprising a communication interface configured to access at least a stream and at least one processor configured to:

- decode a part of a picture from the accessed stream;
- filter the decoded picture part with a deblocking filter;
- classify at least one sample of the filtered picture part into one of N classes of an adaptive loop filter, N being an integer;
- filter the at least one sample with an adaptive loop filter associated with the class to which the at least one sample belongs, called current class, wherein the filtering with an adaptive loop filter is weighted responsive to the current class and further to information derived from the filtering with a deblocking filter.

An encoding device comprising a communication interface configured to access at least a picture part and at least one processor configured to:

- encode and reconstruct the accessed picture part;
- filter the reconstructed picture part with a deblocking filter;
- classify at least one sample of the filtered picture part into one of N classes of an adaptive loop filter, N being an integer;
- filter the at least one sample with an adaptive loop filter associated with the class to which the at least one sample belongs, called current class, wherein the filtering with an adaptive loop filter is weighted responsive to the current class and further to information derived from the filtering with a deblocking filter.

A computer program or a medium storing such a computer program is disclosed, wherein the computer program comprises software code instructions for performing the encoding method or the decoding method when the computer program is executed by a processor.
A machine readable medium is disclosed that has stored thereon machine executable instructions that, when executed, implement the encoding method or the decoding method.
In one embodiment, filtering the at least one sample with an adaptive loop filter associated with the current class comprises:

- determining at least one deblocking level from the information derived from the filtering with a deblocking filter;
- determining a final weight from the at least one deblocking level and further from the current class; and
- filtering the at least one sample with an adaptive loop filter associated with the current class responsive to the final weight.

In one embodiment, the information derived from the filtering with a deblocking filter is one or more of a deblocking filter delta and a deblocking filter mode.
In one embodiment, the information derived from the filtering with a deblocking filter being a deblocking filter delta, the determining at least one deblocking level from the information comprises determining the at least one deblocking level as an absolute value of the deblocking filter delta divided by a scaling factor, the scaling factor depending on a quantization parameter.
In one embodiment, the information derived from the filtering with a deblocking filter being a deblocking filter mode, the determining (S3240) at least one deblocking level from the information comprises assigning deblocking levels to pixels depending on position of the pixels with respect to a boundary and on deblocking filter mode of the pixels.
In one embodiment, the final weight is determined from both a horizontal deblocking level and a vertical deblocking level by:

- swapping the horizontal and vertical deblocking levels in the case where adaptive loop filtering transform is diagonal flip or rotation;
- multiplying each horizontal and vertical deblocking levels with a factor derived from adaptive loop filtering orientation of the current class to obtain modulated horizontal and vertical deblocking levels;
- multiplying each modulated horizontal and vertical deblocking levels with a factor derived from adaptive loop filtering activity of the current class to obtain new modulated horizontal and vertical deblocking levels;
- subtracting each new modulated horizontal and vertical deblocking levels from an offset value to obtain first and second weights; and
- multiplying the first and second weights to obtain a final weight.

In one embodiment, the final weight is determined from both a horizontal deblocking level and a vertical deblocking level by:

- swapping the horizontal and vertical deblocking levels in the case where adaptive loop filtering transform is diagonal flip or rotation;
- multiplying each horizontal and vertical deblocking levels with a factor derived from adaptive loop filtering orientation of the current class to obtain modulated horizontal and vertical deblocking levels;
- adding the modulated horizontal and vertical deblocking levels to obtain a single deblocking level;
- multiplying the single deblocking level with a factor derived from adaptive loop filtering activity of the current class to obtain a new modulated deblocking level;
- subtracting the new modulated deblocking level from an offset value to obtain a final weight.

In one embodiment, determining a weight from the at least one deblocking level and further from the class to which the at least one sample belongs comprises:

- multiplying a single deblocking level with a factor derived from adaptive loop filtering orientation of the current class to obtain a modulated deblocking level;
- multiplying the modulated deblocking level with a factor derived from adaptive loop filtering activity of the current class to obtain new modulated deblocking level;
- subtracting the new modulated deblocking level from an offset value to obtain a final weight.

In one embodiment, filtering the at least one sample F2 with an adaptive loop filter associated with the current class responsive to the final weight is as follows:

$$ALF(F2)*weight+F2*(1-weight)$$

where weight is the final weight.

4. BRIEF SUMMARY OF THE DRAWINGS

- Figure 1 represents an exemplary architecture of a transmitter configured to encode a picture in a bitstream according to a specific and non-limiting embodiment;
- Figure 2 illustrates an exemplary video encoder according to a specific and non-limiting embodiment;
- Figure 3 is a pictorial example of image samples modified by deblocking filtering process according to the prior art;
- Figure 4 is a flowchart of a deblocking filtering process according to the prior art;
- Figure 5 is a pictorial example illustrating samples of two neighboring blocks used to decide a deblocking filter mode according to the prior art;
- Figure 6 is a pictorial example illustrating four 1-D directional patterns for SAO Edge Offset sample classification according to the prior art;
- Figure 7 is a pictorial example illustrating SAO Band Offset with the associated starting band position and offsets of four consecutive bands according to the prior art;
- Figure 8 is a flowchart of an adaptive loop filtering process according to the prior art;
- Figure 9 is a pictorial example illustrating three diamond filter shapes for adaptive loop filtering according to the prior art;
- Figure 10 is a pictorial example illustrating adaptive loop filtering directions according to the prior art;
- Figure 11 is a flowchart of an encoding method according to a specific and non-limiting embodiment;
- Figure 12 is a flowchart of a weight based adaptive loop filtering method according to a specific and non-limiting embodiment;
- Figure 13 is a flowchart of a step of the weight based adaptive loop filtering method of Figure 12 according to a specific and non-limiting embodiment;

- Figures 14-15 are pictorial examples of deblocking levels for given pixel positions according to specific and non-limiting embodiments;
- Figures 16-19 are flowcharts of a method for deriving weights according various specific and non-limiting embodiments;
- Figure 20 represents an exemplary architecture of a receiver configured to decode a picture from a bitstream according to a specific and non-limiting embodiment;
- Figure 21 illustrates an exemplary video decoder according to a specific and non-limiting embodiment; and
- Figure 22 is a flowchart of a decoding method according to a specific and non-limiting embodiment.

## 5. DETAILED DESCRIPTION

It is to be understood that the figures and descriptions have been simplified to illustrate elements that are relevant for a clear understanding of the present embodiments, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

A picture is an array of luma samples in monochrome format or an array of luma samples and two corresponding arrays of chroma samples (or three arrays of tri-chromatic color samples such as RGB) in 4:2:0, 4:2:2, and 4:4:4 colour format. Generally, a "block" addresses a specific area in a sample array (e.g., luma Y), and a "unit" includes the collocated block of all color components (luma Y and possibly chroma Cb and chroma Cr). A slice is an integer number of basic coding units such as HEVC coding tree units or H.264 macroblock units. A slice may consist of a complete picture as well as part thereof. Each slice may include one or more slice segments.

In the following, the word "reconstructed" and "decoded" can be used interchangeably. Usually but not necessarily "reconstructed" is used on the encoder side while "decoded" is used on the decoder side. It should be noted that the term "decoded" or "reconstructed" may mean that a bitstream is partially "decoded" or "reconstructed," for example, the signals obtained after deblocking filtering but before SAO/ALF filtering, and the reconstructed samples may be different from the final decoded output that is used for display. We may also use the terms "image," "picture," and "frame" interchangeably.

In the following, the terms "partition" and "split" are used interchangeably and the terms "class" and "category" are used interchangeably.

Various embodiments are described with respect to the HEVC standard. However, the present embodiments are not limited to HEVC, and can be applied to other standards, recommendations, and extensions thereof, including for example HEVC or HEVC extensions like Format Range (RExt), Scalability (SHVC), Multi-View (MV-HEVC) Extensions and future video coding standard developed by Joint Video Experts Team (JVET). The various embodiments are described with respect to the encoding/decoding of a picture block. They may be applied to encode/decode a whole picture or a whole sequence of pictures.

Reference to "one embodiment" or "an embodiment", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Various methods are described below, and each of the methods comprises one or more steps or actions for achieving the described method. Unless a specific order of steps or actions is required for proper operation of the method, the order and/or use of specific steps and/or actions may be modified or combined.

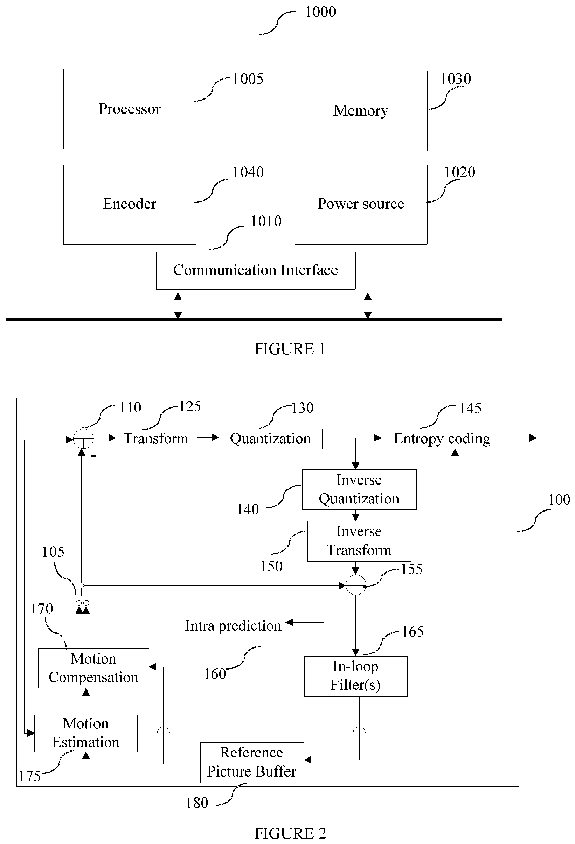

**Figure 1** represents an exemplary architecture of a transmitter 1000 configured to encode a picture in a bitstream according to a specific and non-limiting embodiment.

The transmitter 1000 comprises one or more processor(s) 1005, which could comprise, for example, a CPU, a GPU and/or a DSP (English acronym of Digital Signal Processor), along with internal memory 1030 (e.g. RAM, ROM, and/or EPROM). The transmitter 1000 comprises one or more communication interface(s) 1010 (e.g. a keyboard, a mouse, a touchpad, a webcam), each adapted to display output information and/or allow a user to enter commands and/or data; and a power source 1020 which may be external to the transmitter 1000. The transmitter 1000 may also comprise one or more network interface(s) (not shown). Encoder module 1040 represents the module that may be included in a device to perform the coding functions. Additionally, encoder module 1040 may be implemented as a separate element of the transmitter 1000 or may be incorporated within processor(s) 1005 as a combination of hardware and software as known to those skilled in the art.

The picture may be obtained from a source. According to different embodiments, the source can be, but is not limited to:

- a local memory, e.g. a video memory, a RAM, a flash memory, a hard disk;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

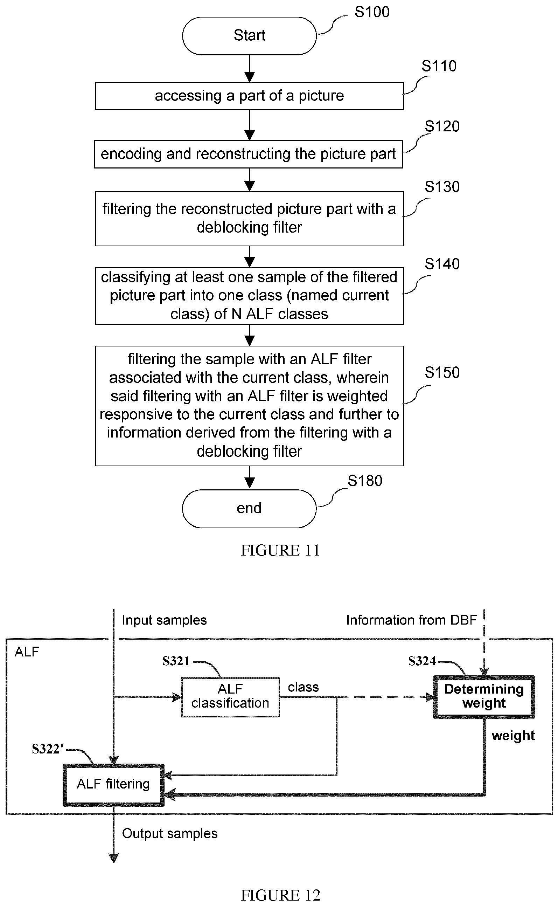

According to different embodiments, the bitstream may be sent to a destination. As an example, the bitstream is stored in a remote or in a local memory, e.g. a video memory or a RAM, a hard disk. In a variant, the bitstream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network. According to an exemplary and non-limiting embodiment, the transmitter 1000 further comprises a computer program stored in the memory 1030. The computer program comprises instructions which, when executed by the transmitter 1000, in particular by the processor 1005, enable the transmitter 1000 to execute the encoding method described with reference to Figure 11. According to a variant, the computer program is stored externally to the transmitter 1000 on a non-transitory digital data support, e.g. on an external storage medium such as a HDD, CD-ROM, DVD, a read-only and/or DVD drive and/or a DVD Read/Write drive, all known in the art. The transmitter 1000 thus comprises a mechanism to read the computer program. Further, the transmitter 1000 could access one or more Universal Serial Bus (USB)-type storage devices (e.g., "memory sticks.") through corresponding USB ports (not shown).

According to exemplary and non-limiting embodiments, the transmitter 1000 can be, but is not limited to:

- a mobile device;
- a communication device;
- a game device;
- a tablet (or tablet computer);
- a laptop;
- a still picture camera;
- a video camera;
- an encoding chip or encoding device/apparatus;
- a still picture server; and
- a video server (e.g. a broadcast server, a video-on-demand server or a web server).

**Figure 2** illustrates an exemplary video encoder 100, e.g. an encoder of HEVC type, configured to execute the encoding method of Figure 11. The encoder 100 is an example of a transmitter 1000 or part of such a transmitter 1000.

For coding, a picture is usually partitioned into basic coding units, e.g. into coding tree units (CTU) in HEVC or into macroblock units in H.264. A set of possibly consecutive basic coding units is grouped into a slice. A basic coding unit contains the basic coding blocks of all color components. In HEVC, the smallest coding tree block (CTB) size 16x16 corresponds to a macroblock size as used in previous video coding standards. It will be understood that, although the terms CTU and CTB are used herein to describe encoding/decoding methods and encoding/decoding apparatus, these methods and apparatus should not be limited by these specific terms that may be worded differently (e.g. macroblock) in other standards such as H.264.

In HEVC coding, a picture is partitioned into CTUs of square shape with a configurable size typically 64x64, 128x128, or 256x256. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

In more recent encoding systems, a CTU is the root of a coding tree partitioning into Coding Units (CU). A coding tree is a tree in which a parent node (usually corresponding to a CU) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. The coding tree has a unique root node, e.g. a CTU. A leaf of the coding tree is a terminating node of the tree. Each node of the coding tree represents a CU that may be further split into smaller CUs also named sub-CUs or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure. There is no partitioning of a CB into PBs and TBs, i.e. a CU is made of a single PU and a single TU.

In the following, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

Back to figure 2, in the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Residuals are calculated by subtracting (110) a predicted sample block (also known as a predictor) from the original picture block.

CUs in intra mode are predicted from reconstructed neighboring samples, e.g. within the same slice. A set of 35 intra prediction modes is available in HEVC, including a DC, a planar, and 33 angular prediction modes. CUs in inter mode are predicted from reconstructed samples of a reference picture stored in a reference picture buffer (180).

The residuals are transformed (125) and quantized (130). The quantized transform coefficients, as well as motion vectors and other syntax elements, are entropy coded (145) to output a bitstream. The encoder may also skip the transform or bypass both transform and quantization, i.e., the residual is coded directly without the application of the transform or quantization processes.

The entropy coding may be, e.g., Context Adaptive Binary Arithmetic Coding (CABAC), Context Adaptive Variable Length Coding (CAVLC), Huffman, arithmetic, exp-Golomb, etc. CABAC is a method of entropy coding first introduced in H.264 and also used in HEVC. CABAC involves binarization, context modeling and binary arithmetic coding. Binarization maps the syntax elements to binary symbols (bins). Context modeling determines the probability of each regularly coded bin (i.e. non-bypassed) based on some specific context. Finally, binary arithmetic coding compresses the bins to bits according to the determined probability.

The encoder comprises a decoding loop and thus decodes an encoded block to provide a reference for further predictions. The quantized transform coefficients are de-quantized (140) and inverse transformed (150) to decode residuals. A picture block is reconstructed by combining (155) the decoded residuals and the predicted sample block. An in-loop filter (165) is applied to the reconstructed picture, for example, to perform DBF/SAO/ALF filtering to reduce coding artifacts. The filtered picture may be stored in a reference picture buffer (180) and used as reference for other pictures.

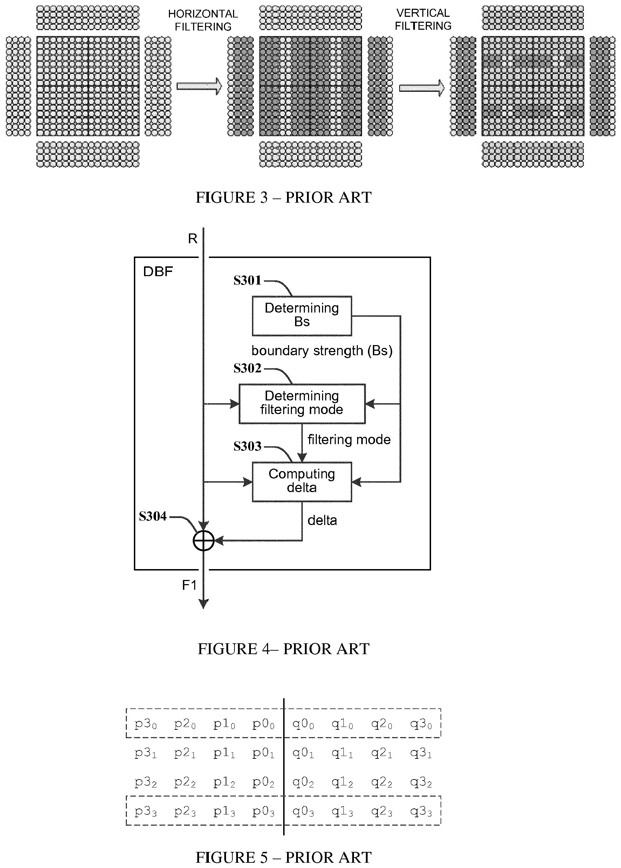

DBF filtering in AVC and HEVC applies along CU boundaries. In HEVC, it applies on an 8x8 pixels grid (for luma), and up to 3 samples on one side of a boundary and 3 samples on the other side may be filtered. The HEVC deblocking filter process is disclosed in section 8.7.2 of the document ITU-T H.265 (04/2015). For each CU, the vertical boundaries are filtered first, then the horizontal edges are filtered as illustrated by **Figure 3.** Figure 3 shows the samples that are modified by the deblocking filter process of HEVC.

**Figure 4** depicts a flowchart of a deblocking filter process. In a step S301, a boundary strength (BS) is determined from data such as the prediction type (intra/inter) and motion information (e.g. motion vectors, reference pictures) of blocks adjacent to the considered boundary. BS can take 3 values: 0, 1, or 2. BS is zero if the boundary is not a block boundary (either transform or prediction block). Otherwise, BS is 2 if either adjacent block is intra coded, 1 if both blocks are inter coded, and the boundary is a transform block edge with at least one non-zero residual, or blocks have different motion parameters, and 0 otherwise (inter blocks with same reference picture(s) and motion vectors less than 1-pixel apart). A boundary in a luma block is filtered if BS=1 or 2, a boundary in a chroma block is filtered if BS=2. Higher values of Bs enable stronger filtering.

At step S302, a filtering mode (none, weak, normal, strong) is determined depending on:

- the BS determined at step S301: if BS is zero, luma is not filtered (luma filter mode is "none"), and if Bs<2, chroma is not filtered (chroma filter mode is "none"),

- parameters derived from Bs and the average local QP on both sides of the boundary: $\beta$ and tc.
- some conditions depending on luma sample values from the first and the last 4 lines (resp. columns) on either side of the boundary as illustrated by **figure 5** such as:

  - a condition C1 is derived from the difference between luma reconstructed samples at boundary and 3 samples away: C1 is set to true if for i=0 or 3, $|p3_i - p0_i| + |q3_i - q0_i| < \beta/8$,
  - a condition C2 is derived from a gradient at the boundary: C2 is set to true if for i=0 or 3, $|p0_i - q0_i| < 2.5*tc$, and
  - a condition C3 is derived from laplacian activities. To this aim, dp0, dp3, dq0, dq3 are computed as follows: dp0 = $|p0_0 - 2p1_0 + p2_0|$, dp3 = $|p0_3 - 2p1_3 + p2_3|$ and similarly for dq0 and dq3. If dp0 + dp3 + dq0 + dp3 $\geq \beta$, filter mode is "none". C3 is set to true if for i=0 or 3, dpi + dqi < $\beta/8$,
  - a condition C4 is set to true if dp0+dp3 < $3\beta/16$, and
  - a condition C5 is set to true if dq0+dq3 < $3\beta/16$.

If all C1, C2, C3, are true, filter mode is "strong". Otherwise the filter mode is refined for each side: for P side, the filter mode is set to "normal" if C4 is true, and to "weak" otherwise, and for Q side, the filter mode is set to "normal" if C5 is true and to "weak" otherwise. The reconstructed samples R are possibly already filtered by another filter, e.g. a bilateral filter.

In step S303, delta values are computed. To this aim, an offset (delta value) is computed for each sample, depending on the filter mode, the distance from the boundary, its neighboring pixels, and the parameter tc. The delta value is then clipped, responsive to tc and the filter mode. Filter mode "none" means delta is zero. For the other filter modes, the following apply:

For luma samples, in normal and weak modes, $\delta_0 = (9(q0-p0)-3(q1-p1)+8)/16$ is first computed. If $|\delta_0|{\geq}10tc$, then offset is zero, otherwise $\Delta_0$ is set to $\delta_0$ clipped to +/-tc, offset for p0 is $+\Delta_0$, and $-\Delta_0$ for q0.

In weak mode, all other offsets (for p1,p2,p3,q1,q2,q3) are zero. In normal mode, offset for p1 is $((p2+p0)/2-p1+\Delta_0)/2$, and offset for q1 is $((q2+q0)/2-q1-\Delta_0)/2$. The offsets are then clipped to +/-(tc/2).
In strong mode (luma), offset for p0, p1, p2 are respectively (p2+2p1-6p0+2q0+q1)/8, (p2-3p1+p0+q0)/4, and (2p3-5p2+p1+p0+q0)/8, clipped to +/-(2tc). Deltas for q0, q1, q2 are obtained by exchanging q and p is previous formulas.
For chroma, filter mode is ignored, and $\delta_c = (4(p0-q0)+p1-q1)/8$. The offset is $\delta_c$ clipped to +/-tc for p0, and the opposite for q0. All other offsets are zero.
In step S304, the delta values are added to the reconstructed samples to obtain filtered samples.
At the end, 0 to 3 pixels away on either side of the boundary can be modified, depending on the filter mode, and up to 4 pixels away on either side are used to decide the filter mode and compute the deltas.
SAO filtering in HEVC may be activated or de-activated at video level, slice level and CTB level. Two SAO modes are specified: edge offset (EO) and band offset (BO). For EO, the sample classification is based on local directional structures in the picture to be filtered. For BO, the sample classification is based on sample values. The parameters for EO or BO may be explicitly coded or derived from the neighborhood. SAO can be applied to the luma and chroma components, where the SAO mode is the same for Cb and Cr components. The SAO parameters (i.e. the offsets, the SAO types EO, BO and inactivated, the class in case of EO and the band position in case of BO) are configured individually for each color component.
In the case where SAO filtering is activated for a CTB, the samples in the CTB are categorized into NC categories, e.g. NC=5 in HEVC. For sample s in category c(s), the sample can be adjusted to s = s + off(c(s)), where off(n) is the offset value of category n. In HEVC, the offsets values of only 4 (=NC-1) categories are decoded from the bitstream, the other offset values being set to 0. For BO, absolute offset values and signs are decoded. For EO, only absolute offset values are decoded, the signs being inferred from the category (positive sign for categories 1 and 2, and negative sign for categories 3 and 4).

Edge Offset

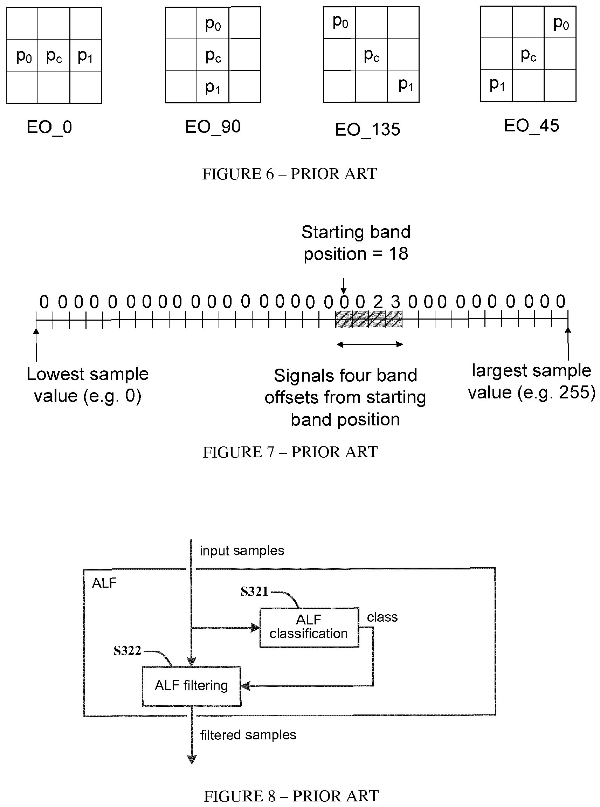

EO uses four 1-D directional patterns for sample classification: horizontal, vertical, 135° diagonal, and 45° diagonal, as shown in **figure 6** where the label "$p_c$" represents a current sample and the labels "po" and "$p_1$" represent two neighboring samples. Four EO classes are specified based on the directions, and each EO class corresponds to one direction. The selected EO class, only one for each CTB that enables EO, is signaled in the bitstream as side information.

TABLE 1

| Category | Condition |
|----------|-----------|
| 1 | $p_c < p_0$ and $p_c < p_1$ |
| 2 | ($p_c < p_0$ and $p_c == p_1$) or ($p_c == p_0$ and $p_c < p_1$) |
| 3 | ($p_c > p_0$ and $p_c == p_1$) or ($p_c == p_0$ and $p_c > p_1$) |
| 4 | $p_c > p_0$ and $p_c > p_1$ |
| 0 | None of the above |

For a given EO class, each sample inside the CTB is classified into one of five (NC = 5) categories based on local gradients. Specifically, the current sample value, labeled as "$p_c$," is compared with its two neighbors along the selected 1-D direction. The categorization rules for a sample are summarized in Table 1. Categories 1 and 4 are associated with a local valley and a local peak along the selected 1-D pattern, respectively, categories 2 and 3 are associated with concave and convex corners along the selected 1-D pattern, respectively. Positive offsets are used for categories 1 and 2, and negative offsets are used for categories 3 and 4.

If the current sample value does not belong to categories 1- 4 (i.e., the current sample value is the same as its two neighbors, or if $p_0 < p_c < p_1$ or $p_0 > p_c > p_1$), then it is in category 0 and SAO is not applied (i.e., offset is 0). For categories 1- 4, offsets are encoded. More precisely, the absolute values of four offsets are signaled by the encoder, one absolute value for each category. The signs of the offsets are not encoded but implicitly derived from the corresponding EO categories.

Band Offset

For BO, the range of sample values (for example, 0 - 255 in 8-bit) is uniformly split into 32 bands. One offset is added to all samples whose value belong to the same band. In HEVC, only offsets of (NC - 1) = 4 consecutive bands and the starting band position are signaled to the decoder as illustrated on **figure 7.** On this figure, the starting band is the eighteenth band and the encoded offsets value are {0, 0, 2, 3}. The starting band position indicates the position of the first band with an encoded offset. One offset is coded for each of the (NC - 1) bands and the remaining bands have an offset equal to zero. When the starting band position is close to the last band position, the offset values may correspond to non-consecutive bands since the bands are managed as a circular buffer. Note for BO, those four signaled bands can be considered as four categories, and the remaining bands can be considered as another category. In the present application, we use the terms "band", "class" and "category" interchangeably. For BO in HEVC, offsets are encoded for four bands. More precisely, the absolute values of four offsets are signaled by the encoder, one absolute value for each of the 4 bands. The signs of the offsets are also signaled by the encoder.

ALF is based on Wiener filters. Such filters are linear filters (1D or 2D) designed to minimize the square error between the filtered samples, and the reference ones (which are in general the original samples).

**Figure 8** depicts a flowchart of an ALF filtering process as applied on both the encoder and decoder sides. In step S321, the input samples are classified according to a specific criterion. At step S322, for each class (also called category), specific filter coefficients are applied to the samples belonging to this class. On the encoder side, the filter coefficients are usually determined, e.g. by a Least Mean Square approach, and transmitted in a bitstream to the decoder. On figure 8, the determination of the filter coefficients is not shown.

In section 2.5.2 of the document JVET-F1001 from Chen et al entitled *"Algorithm Description of Joint Exploration Test Model 6 (JEM 6)"*, an ALF with block-based filter adaption is described. For the luma component, one among 25 filters is selected for each 2x2 block based on a direction and activity of local gradients.

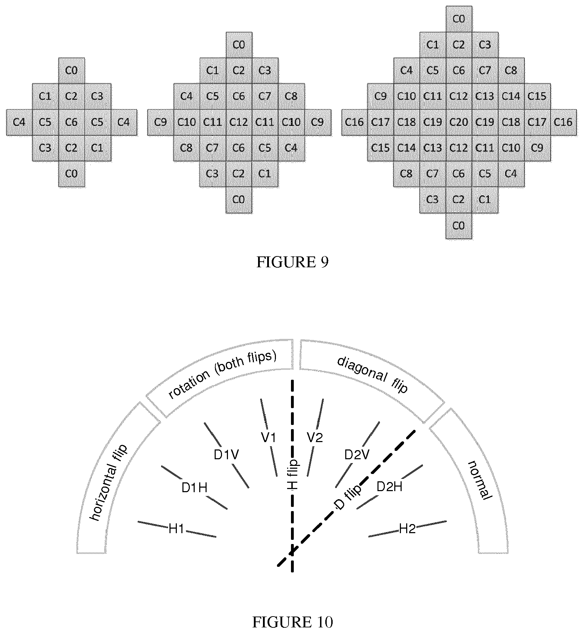

Up to three diamond filter shapes (as shown in **Figure 9**) can be selected for the luma component. An index is signalled at picture level to indicate the filter shape used for the luma component of a picture. For chroma components in a picture, the 5x5 diamond filter shape is always used.

In a specific and non-limiting embodiment, the block classification of step S321 applies for each 2x2 block, i.e. each 2x2 block is categorized into one out of 25 classes. The classification is based on local signal analysis (activity, directionality, both being determined from gradients). More precisely, the class is defined as follows $C = 5D + \hat{A}$, where D is the directionality and $\hat{A}$ is a quantized value of activity.

$$g_v = \sum_{k=i-2}^{i+3} \sum_{l=j-2}^{j+3} V_{k,l}, \ V_{k,l} = |2R(k,l) - R(k,l-1) - R(k,l+1)|,$$

$$g_h = \sum_{k=i-2}^{i+3} \sum_{l=j-2}^{j+3} H_{k,l}, \ H_{k,l} = |2R(k,l) - R(k-1,l) - R(k+1,l)|,$$

$$g_{d0} = \sum_{k=i-2}^{i+3} \sum_{l=j-3}^{j+3} D1_{k,l}, \ D1_{k,l} = |2R(k,l) - R(k-1,l-1) - R(k+1,l+1)|$$

$$g_{d1} = \sum_{k=i-2}^{i+3} \sum_{j=j-2}^{j+3} D2_{k,l}, \ D2_{k,l} = |2R(k,l) - R(k-1,l+1) - R(k+1,l-1)|$$

To calculate $D$ and $\hat{A}$, gradients of the horizontal, vertical and two diagonal direction are first calculated using 1-D Laplacian:

Indices $i$ and $j$ refer to the coordinates of the upper left sample in the $2 \times 2$ block and $R(i,j)$ indicates a reconstructed sample at coordinate $(i,j)$.

Then maximum and minimum values of the gradients of horizontal and vertical directions are set as:

$$g_{h,v}^{max} = max(g_h, g_v), \ g_{h,v}^{min} = min(g_h, g_v),$$

and the maximum and minimum values of the gradient of two diagonal directions are set as:

$$g_{d0,d1}^{max} = max(g_{d0}, g_{d1}), \ g_{d0,d1}^{min} = min(g_{d0}, g_{d1}),$$

To derive the value of the directionality $D$, these values are compared against each other and with two values $t_1$ and $t_2$:

**Step 1.** If both $g_{h,v}^{max} \leq t_1 \cdot g_{h,v}^{min}$ and $g_{d0,d1}^{max} \leq t_1 \cdot g_{d0,d1}^{min}$ are true, $D$ is set to 0.

**Step 2.** If $g_{h,v}^{max}/g_{h,v}^{min} > g_{d0,d1}^{max}/g_{d0,d1}^{min}$, continue to Step 3, otherwise continue from Step 4.

**Step 3.** If $g_{h,v}^{max} > t_2 \cdot g_{h,v}^{min}$, $D$ is set to 2, otherwise $D$ is set to 1.

**Step 4.** If $g_{d0,d1}^{max} > t_2 \cdot g_{d0,d1}^{min}$, $D$ is set to 4, otherwise $D$ is set to 3.

The activity value A is calculated as:

$$A = \sum_{k=i-2}^{i+3} \sum_{l=j-2}^{j+3} (V_{k,l} + H_{k,l}).$$

$A$ is further quantized to the range of 0 to 4, inclusively, and the quantized value is denoted as $\hat{A}$.

For both chroma components in a picture, no classification method is applied, i.e. a single set of ALF coefficients is applied for each chroma component.

Before filtering each $2\times2$ block, geometric transformations such as rotation or diagonal and horizontal flips may be applied to the filter coefficients $f(k,l)$ depending on gradient values calculated for that block. This is equivalent to applying these transformations to the samples in the filter support region. The idea is to make different blocks to which ALF is applied more similar by aligning their directionality. These transformations can be thought of as part of the classification, with 4 directions (defined by the different transformation rules) sharing the same set of filter coefficients. This way, two orientations (diagonal D2H and upright H2) can actually address 8 directions as illustrated by **figure 10.** ALF classification into 25 classes may be split into 5 orientation values (none, diagonal, strongly diagonal, upright, strongly upright), each with 5 activity levels.

It will be appreciated, however, that the present embodiment is not restricted to this specific classification method. Different methods may be used that are not limited to classification of 2x2 blocks. Other formulas different from 1D-Laplacian and thresholding may be used.

At step S322, when ALF is enabled for a CU, each sample $R(i,j)$ within the CU is filtered, resulting in a sample value $R'(i,j)$ as shown in equation below, where $L$ denotes filter length, and $f(k,l)$ denotes the decoded filter coefficients.

$$R'(i,j) = \sum_{k=-L/2}^{L/2} \sum_{l=-L/2}^{L/2} f(k,l) \times R(i+k, j+l) \qquad (1)$$

The filtering process of luma component may be controlled at CU level. A flag may be signalled to indicate whether ALF is applied to the luma component of a CU. For chroma component, whether ALF is applied or not is indicated at picture level only. ALF filter parameters are signalled in the first CTU. Up to 25 sets of luma filter coefficients could be signalled. To reduce bits overhead, filter coefficients of different classification can be merged. Also, the ALF coefficients used to filter reference pictures can be reused as ALF coefficients for the current picture.

**Figure 11** represents a flowchart of a method for encoding a picture part in a bitstream according to a specific and non-limiting embodiment. The picture part may be a region of a picture or the whole picture.

The method starts at step S100. At step S110, a transmitter 1000, e.g. such as the encoder 100, accesses a part of a picture. At step S120, the transmitter encodes and reconstructs the accessed picture part in order to obtain a reconstructed picture part. To this aim, the picture part may be split into blocks. Encoding the picture part comprises encoding the blocks of the picture part. Encoding a block usually but not necessarily comprises subtracting a predictor from the block to obtain a block of residuals, transforming the block of residuals into a block of transform coefficients, quantizing the block of coefficients with a quantization step size QP to obtain a quantized block of transform coefficients and entropy coding the quantized block of transform coefficients in the bitstream. Reconstructing a block on the encoder side usually but not necessarily comprises de-quantizing and inverse transforming the quantized block of transform coefficients to obtain a block of residuals and adding the predictor to the block of residuals to obtain a decoded block. At step S130, the reconstructed picture part is filtered with a deblocking filter. In a variant, the reconstructed picture part is filtered with a deblocking filter and further with a SAO filter. In another variant, the reconstructed picture part is filtered with a bilateral filter followed by a deblocking filter followed by a SAO filter.

At step S140, at least one sample of the filtered picture part is classified into one class, named current class, of N adaptive loop filter classes, N being an integer. In an example, N=25.

At step S150, the at least one sample is filtered with an ALF filter associated with the current class, wherein the ALF filtering is weighted responsive to the current class and further to at least one information derived from the deblocking filtering of step S130. In a specific embodiment each sample of the filtered picture part is classified into one class at step S140 and each sample is filtered in step S150.

The method ends at step S180.

**Figure 12** represents a flowchart of adaptive loop filtering according to a specific and non-limiting embodiment. The steps identical to the steps of figure 8 are identified with the same reference number.

At step S321, at least one sample is classified.

At step S324, a weight is determined responsive to information derived from deblocking filtering and further from the current class (taken at large, i.e. including transformations). Other information coming from upstream decoding processes may also be taken into account (e.g. QP, coding modes, etc).

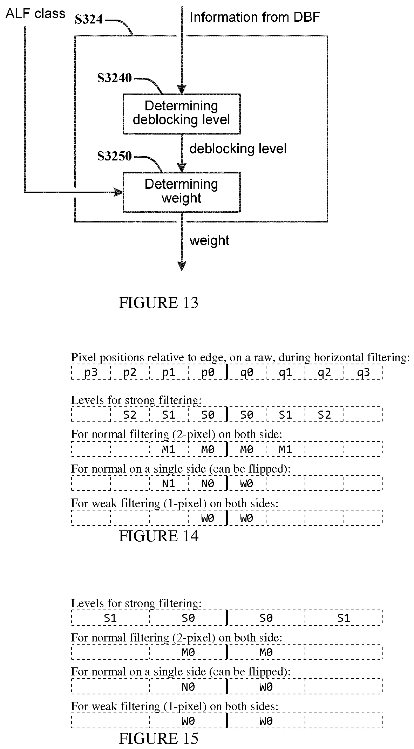

Step S324 is split into two sub-steps because information coming from deblocking filter may not be usable directly. Step S324 is detailed on **Figure 13.** At step S3240, a deblocking level is determined from the deblocking filtering, and then, at step S3250, a final weight is determined from both this(these) deblocking level(s) and ALF classification.

At step S322', the sample is filtered by weighting the adaptive loop filtering responsive to the weight determined at step S324.

ALF filtering can apply weighting in a linear way, so that the result changes from equation (2) to equation (3), considering that weight is normalized to 1.

$$F3 = ALF(F2) \qquad (2)$$

$$F3=ALF(F2)*weight+F2*(1-weight) \ (3)$$

F2 is the input of the ALF, thus R in equation (1). F3 is the output of the ALF thus R' in equation (1). More generally, in the case where weight varies from 0 to M,

$$F3 = \frac{ALF(F2)*weight+F2*(M-weight)}{M}.$$

Alternatively, weighting may be applied in a non-linear fashion by first computing p=ALF(F2)-F2. Then, ρ' is computed by applying a non-linear function on ρ that depends on weight (clipping with a clipping parameter that depend on weight or other non-linear functions). Finally, δ' is added to F2: F3=F2+p'.

On the encoder side, the weight may be optionally taken into account when determining the filter coefficients for the classes. Some parameters used in S324 may be determined at encoder side and transmitted in the bitstream for use by the decoder. Different embodiments may use orientation and activity factors that are fixed, computed from either available metadata and/or parameters transmitted in the bitstream, or a combination of both. The adaptive loop filtering process is modified so that is modulated based on information derived from the DBF. This makes it possible to adjust adaptive loop filtering accordingly by ignoring or weighting filtering at pixel level.

**Figure 13** represents a flowchart of the step S324. The step S324 comprises a step S3240 and a step S3250. At step S3240, a deblocking level is determined from the deblocking filtering. Indeed, information coming from deblocking filter may not be usable immediately. First the deblocking filter provides several types of information, e.g. deltas and deblocking filter mode. The deblocking filter mode is edge-related (boundary between two coding units), not pixel-based, consequently some rules must be defined to generate a pixel-based deblocking level. In addition, ALF classification is constant for a certain block size, therefore it makes sense to generate ALF weights at the same block level as ALF class and coefficients. Consequently, there is a need to consolidate deblocking filter information per block.

Since filtering by DBF comprises horizontal filtering followed by vertical filtering, two types of deblocking information, i.e. two deltas or two deblocking filter modes, are available, namely one for horizontal filtering and one for vertical filtering. Consequently, a 2-channel deblocking level (db1_1 and dbl_2) can be determined at step S3240 and used by step S3250.

In a first embodiment, the per-pixel delta from deblocking filter step S303 is used to determine the deblocking level dbl.

The deblocking level dbl is derived from delta using any form of mapping function, for example using equation 4:

$$dbl = \min\left(dbl_{max}, \frac{|\delta|}{scale}\right) \qquad (4)$$

where the scaling factor *scale* depends on the quantization parameter QP. The scaling factor can be similar to tc parameter in DBF (e.g. make use of the same mapping table used for deriving tc from QP). tc is linked to QP by a piecewise linear function. The results may be clipped with $dbl_{max}$. As an example, $dbl_{max}$ =1.

To generate data at the same block level as ALF class, deltas may be accumulated per ALF block, before or after absolute value (see equations 5 and 6, with n = number of pixels in ALF block):

$$dbl = \min\left(dbl_{max}, \frac{|\sum_{k=1}^{n} \delta_k|}{scale}\right) \qquad (5)$$

$$dbl = \min\left(dbl_{max}, \frac{\sum_{k=1}^{n} |\delta_k|}{scale}\right) (6)$$

In a variant, a single-channel information is determined by merging horizontal and vertical deblocking levels in a single deblocking level as follows:

$$dbl = \min\left(dbl_{max}, \frac{|\sum_{k=1}^{n} \delta_{H,k}+\delta_{V,k}|}{scale}\right)$$

The above equations (4)-(6) may be applied to determine db1_1 and dbl_2.

In a second embodiment, the deblocking filter mode from deblocking filter step S302 is used to determine the deblocking level dbl. The deblocking levels may be assigned to different pixel positions depending on mode, as depicted in **Figure 14** for horizontal deblocking. The first line of Figure 14 depicts four pixels located on either side of a boundary to be filtered. In the case of strong filtering mode, deblocking levels are determined as indicated on the second line of figure 14. In the case of normal filtering mode (i.e. HEVC weak filtering with two pixels filtered on at least one side of the boundary), deblocking levels are determined as indicated on the third and fourth lines of figure 14 depending on the number of pixel to be filtered. Finally, in the case of weak filtering mode (i.e. HEVC weak filtering with a single pixel filtered on either side of the boundary), deblocking levels are determined as indicated on the fifth line of Figure 14. The values S0-S2, M0-M1, N0-N1 and W0 may be fixed values. As an example, S0=M0=N0=W0=1, N1=M1=1/2, S1=2/3, and S2=1/3. In another example, S0 = 1, S1=M0=N0=2/3, and S2=M1=N1=W0=1/3.

Transposition for vertical deblocking is straightforward.

To generate information at the same block level as ALF, the same principle can be applied, but for blocks instead of pixels, as depicted in **Figure 15** for 2x2 blocks. This works for blocks up to 4x4 considering that deblocking filter mode is constant for 4 rows for horizontal deblocking (and 4 columns for vertical deblocking).

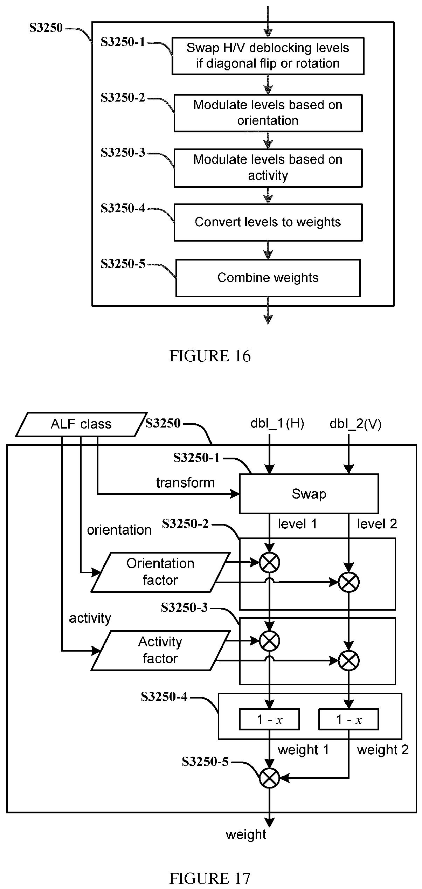

At step S3250, a final weight is determined from both the deblocking level(s) and ALF classification. This step is detailed on Figures 16-19.

ALF classes in JEM 6 are composed of 5 orientation values and 5 activity levels (25 initial classes), plus 4 transforms. This results in 100 actual classes. To consider 2 deblocking dimensions and the number of possible deblocking levels, and define an ALF weight for each case and transmit all the required information in the bitstream would probably involve too much bit cost and memory storage.

The proposed derivation rules allow reducing the number of parameters.

The step S3250-1 takes as inputs the deblocking levels (coming from step S3240) and ALF transform, and outputs two levels. This step consists in swapping horizontal and vertical deblocking levels when ALF transform is diagonal flip or rotation (which is actually a combination of diagonal and horizontal flip). Horizontal flip is not used, since deblocking is invariant to horizontal flip.

At step S3250-2, the deblocking levels (db1_1 and dbl_2) are modulated using orientation value extracted from ALF class, i.e. each deblocking level is multiplied by a factor derived from orientation value, e.g. using a Look-Up Table. In JEM 6, there are 5 orientation values.

At step S3250-3, the deblocking levels (db1_1 and dbl_2) are modulated using activity extracted from ALF class, each deblocking level is multiplied by a factor derived from activity, e.g. using a Look-Up Table. In JEM 6, there are 5 activity values.

At step S3250-4, the deblocking levels after modulation are converted into weights by taking complement to 1, considering that deblocking levels are normalized to 1. More generally, the deblocking levels after modulation are converted into weights by taking complement to an offset value, e.g. the maximum deblocking level value. The goal of this step is to invert the value: zero deblocking level means "no deblocking", which we want to map to "full ALF", while "maximum deblocking" should be mapped to "no ALF", hence weight zero.

At step S3250-5, weights are combined by multiplying them together to produce a final weight.

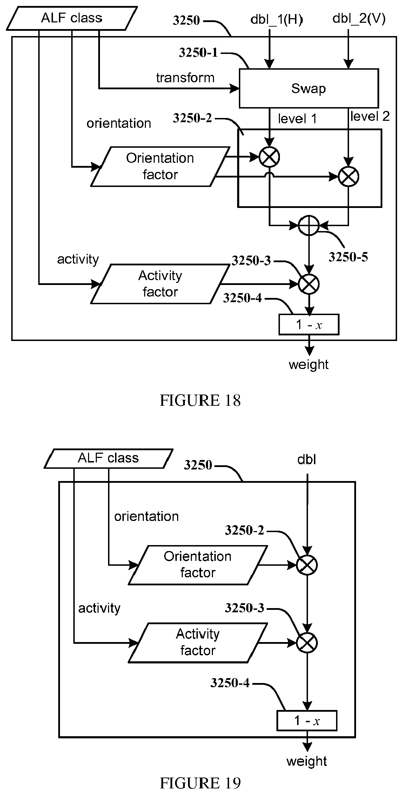

In the case where orientation and activity factors are always equal for both deblocking levels, swapping them does not make any difference, so the step S3250-1 is skipped. Orientation and activity factors may be fixed, computed from either available metadata and/or parameters transmitted in the bitstream, or a combination of both. Several embodiments are illustrated by figures 17-19. In the embodiment Figure 18, deblocking levels are merged before modulating by the activity factor. In the embodiment of Figure 19, a single deblocking level is provided by step S3240.

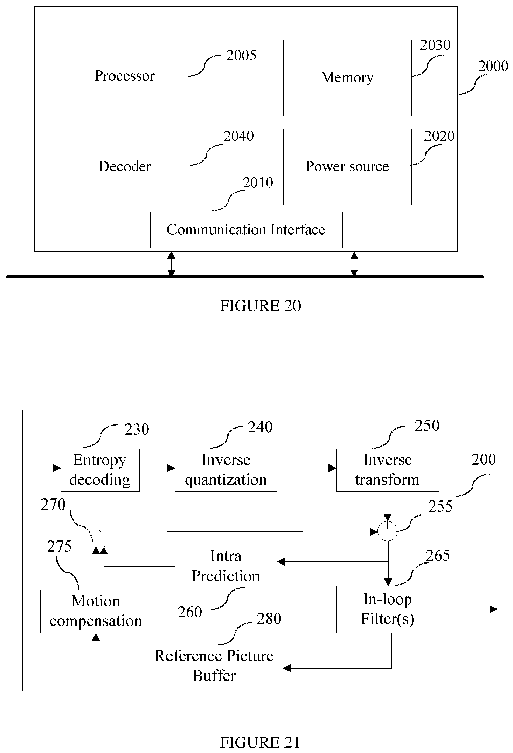

**Figure 20** represents an exemplary architecture of a receiver 2000 configured to decode a picture from a bitstream to obtain a decoded picture according to a specific and non-limiting embodiment.

The receiver 2000 comprises one or more processor(s) 2005, which could comprise, for example, a CPU, a GPU and/or a DSP (English acronym of Digital Signal Processor), along with internal memory 2030 (e.g. RAM, ROM and/or EPROM). The receiver 2000 comprises one or more communication interface(s) 2010 (e.g. a keyboard, a mouse, a touchpad, a webcam), each adapted to display output information and/or allow a user to enter commands and/or data (e.g. the decoded picture); and a power source 2020 which may be external to the receiver 2000. The receiver 2000 may also comprise one or more network interface(s) (not shown). The decoder module 2040 represents the module that may be included in a device to perform the decoding functions. Additionally, the decoder module 2040 may be implemented as a separate element of the receiver 2000 or may be incorporated within processor(s) 2005 as a combination of hardware and software as known to those skilled in the art.

The bitstream may be obtained from a source. According to different embodiments, the source can be, but is not limited to:

- a local memory, e.g. a video memory, a RAM, a flash memory, a hard disk;

- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the decoded picture may be sent to a destination, e.g. a display device. As an example, the decoded picture is stored in a remote or in a local memory, e.g. a video memory or a RAM, a hard disk. In a variant, the decoded picture is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

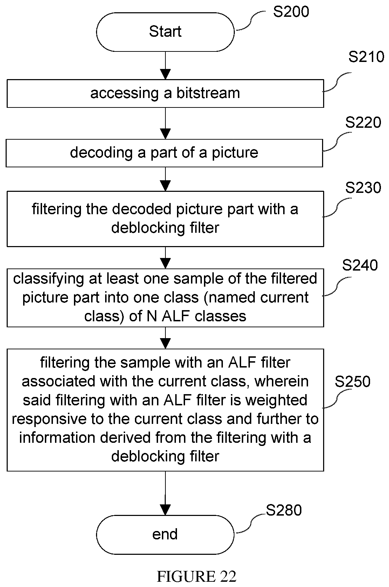

According to a specific and non-limiting embodiment, the receiver 2000 further comprises a computer program stored in the memory 2030. The computer program comprises instructions which, when executed by the receiver 2000, in particular by the processor 2005, enable the receiver to execute the decoding method described with reference to Figure 22. According to a variant, the computer program is stored externally to the receiver 2000 on a non-transitory digital data support, e.g. on an external storage medium such as a HDD, CD-ROM, DVD, a read-only and/or DVD drive and/or a DVD Read/Write drive, all known in the art. The receiver 2000 thus comprises a mechanism to read the computer program. Further, the receiver 2000 could access one or more Universal Serial Bus (USB)-type storage devices (e.g., "memory sticks.") through corresponding USB ports (not shown).

According to exemplary and non-limiting embodiments, the receiver 2000 can be, but is not limited to:

- a mobile device;
- a communication device;
- a game device;
- a set top box;
- a TV set;
- a tablet (or tablet computer);
- a laptop;
- a video player, e.g. a Blu-ray player, a DVD player;
- a display; and
- a decoding chip or decoding device/apparatus.

**Figure 21** illustrates a block diagram of an exemplary video decoder 200, e.g. of the HEVC type, configured to execute the decoding method of figure 22. The video decoder 200 is an example of a receiver 2000 or part of such a receiver 2000. In the exemplary decoder 200, a bitstream is decoded by the decoder elements as described below. Video decoder 200 generally performs a decoding pass reciprocal to the encoding pass as described in Figure 2, which performs video decoding as part of encoding video data.

In particular, the input of the decoder includes a video bitstream, which may be generated by the video encoder 100. The bitstream is first entropy decoded (230) to obtain transform coefficients, motion vectors, and other coded information. The transform coefficients are de-quantized (240) and inverse transformed (250) to decode residuals. The decoded residuals are then combined (255) with a predicted sample block (also known as a predictor) to obtain a decoded/reconstructed picture block. The predicted sample block may be obtained (270) from intra prediction (260) or motion-compensated prediction (i.e., inter prediction) (275). As described above, AMVP and merge mode techniques may be used during motion compensation, which may use interpolation filters to calculate interpolated values for sub-integer samples of a reference block. An in-loop filter (265) is applied to the reconstructed picture. For example, the in-loop filter may comprise a deblocking filter, a SAO filter and an ALF filter. The filtered picture is stored at a reference picture buffer (280).

**Figure 22** represents a flowchart of a method for decoding a picture part from a bitstream according to a specific and non-limiting embodiment. The picture part may be a region of a picture or the whole picture.

The method starts at step S200. At step S210, a receiver 1000, e.g. such as the decoder 100, accesses a bitstream. At step S220, the receiver decodes a part of a picture from the accessed bitstream. The picture part may be split into blocks. Decoding a picture part thus comprises decoding the blocks of the picture part. Decoding a block usually but not necessarily comprises entropy decoding a portion of the bitstream representative of the block to obtain a block of transform coefficients, de-quantizing and inverse transforming the block of transform coefficients to obtain a block of residuals and adding a predictor to the block of residuals to obtain a decoded block. At step S230, the decoded picture part is filtered with a deblocking filter. In a variant, the decoded picture part is filtered with a deblocking filter and further with a SAO filter. In another variant, the picture part is filtered with a bilateral filter followed by a deblocking filter followed by a SAO filter.

At step S240, at least one sample of the filtered picture part is classified into one class, named current class, of N adaptive loop filter classes, N being an integer, e.g. N=25. At step S250, the at least one sample is filtered with an ALF filter associated with the current class, wherein the ALF filtering is weighted responsive to the current class and further to at least one information derived from the deblocking filtering of step S230. In a specific embodiment each sample of the filtered picture part is classified into one class at step S240 and each sample is filtered in step S250.
The method ends at step S280.
Steps S230, S240 and S250 are identical to the step S130, S140 and S150 respectively. The various embodiments disclosed with respect to figures 12-19 also apply on the decoder side.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A decoding method comprising:

   - decoding (S220) a part of a picture;
   - filtering (S230) the decoded picture part with a deblocking filter;
   - classifying (S240) at least one sample of the filtered picture part into one of N classes of an adaptive loop filter, N being an integer;
- filtering (S250) said at least one sample with an adaptive loop filter associated with the class to which said at least one sample belongs, called current class, wherein said filtering with an adaptive loop filter is weighted responsive to said current class and further to information derived from said filtering with a deblocking filter.

2. The decoding method of claim 1, wherein filtering (S250) said at least one sample with an adaptive loop filter associated with the current class comprises:

- determining (S3240) at least one deblocking level from said information derived from said filtering with a deblocking filter;
- determining a final weight (S3250) from said at least one deblocking level and further from said current class; and
- filtering (S250) said at least one sample with an adaptive loop filter associated with the current class responsive to said final weight.

3. The decoding method according to any one of claims 1 to 2, wherein the information derived from said filtering with a deblocking filter is one or more of a deblocking filter delta and a deblocking filter mode.

4. The decoding method according to any one of claims 1 to 3, wherein, said information derived from said filtering with a deblocking filter being a deblocking filter delta, said determining (S3240) at least one deblocking level from said information comprises determining said at least one deblocking level as an absolute value of said deblocking filter delta divided by a scaling factor, said scaling factor depending on a quantization parameter.

5. The decoding method according to any one of claims 1 to 3, wherein, said information derived from said filtering with a deblocking filter being a deblocking filter mode, said determining (S3240) at least one deblocking level from said information comprises assigning deblocking levels to pixels depending on position of said pixels with respect to a boundary and on deblocking filter mode of said pixels.

6. The decoding method according to any one of claims 1 to 5, wherein said final weight is determined from both a horizontal deblocking level and a vertical deblocking level by:

- swapping said horizontal and vertical deblocking levels in the case where adaptive loop filtering transform is diagonal flip or rotation;
- multiplying each horizontal and vertical deblocking levels with a factor derived from adaptive loop filtering orientation of said current class to obtain modulated horizontal and vertical deblocking levels;
- multiplying each modulated horizontal and vertical deblocking levels with a factor derived from adaptive loop filtering activity of said current class to obtain new modulated horizontal and vertical deblocking levels;
- subtracting each new modulated horizontal and vertical deblocking levels from an offset value to obtain first and second weights; and
- multiplying said first and second weights to obtain a final weight.

7. The decoding method according to any one of claims 1 to 5, wherein said final weight is determined from both a horizontal deblocking level and a vertical deblocking level by:

- swapping said horizontal and vertical deblocking levels in the case where adaptive loop filtering transform is diagonal flip or rotation;
- multiplying each horizontal and vertical deblocking levels with a factor derived from adaptive loop filtering orientation of said current class to obtain modulated horizontal and vertical deblocking levels;
- adding said modulated horizontal and vertical deblocking levels to obtain a single deblocking level;
- multiplying said single deblocking level with a factor derived from adaptive loop filtering activity of said current class to obtain a new modulated deblocking level;
- subtracting said new modulated deblocking level from an offset value to obtain a final weight.

8. The decoding method according to any one of claims 1 to 5, wherein determining a weight (S3250) from said at least one deblocking level and further from said class to which said at least one sample belongs comprises:

- multiplying a single deblocking level with a factor derived from adaptive loop filtering orientation of said current class to obtain a modulated deblocking level;
- multiplying said modulated deblocking level with a factor derived from adaptive loop filtering activity of said current class to obtain new modulated deblocking level;
- subtracting said new modulated deblocking level from an offset value to obtain a final weight.

9. The decoding method according to any one of claims 1 to 8, wherein filtering (S250) said at least one sample F2 with an adaptive loop filter associated with the current class responsive to said final weight is as follows:

ALF(F2) *weight+F2*(1-weight)
where weight is said final weight.

10. An encoding method comprising:

- encoding and reconstructing a part of a picture ;
- filtering the reconstructed picture part with a deblocking filter;
- classifying at least one sample of the filtered picture part into one of N classes of an adaptive loop filter, N being an integer;
- filtering said at least one sample with an adaptive loop filter associated with the class to which said at least one sample belongs, called current class, wherein said filtering with an adaptive loop filter is weighted responsive to said current class and further to information derived from said filtering with a deblocking filter.

11. The encoding method of claim 10, wherein filtering said at least one sample with an adaptive loop filter associated with the current class comprises:

- determining (S3240) at least one deblocking level from said information derived from said filtering with a deblocking filter;
- determining a final weight (S3250) from said at least one deblocking level and further from said current class; and
- filtering (S250) said at least one sample with an adaptive loop filter associated with the current class responsive to said final weight.

12. The encoding method according to any one of claims 10 to 11, wherein the information derived from said filtering with a deblocking filter is one or more of a deblocking filter delta and a deblocking filter mode.

13. The encoding method according to any one of claims 10 to 12, wherein, said information derived from said filtering with a deblocking filter being a deblocking filter delta, said determining (S3240) at least one deblocking level from said information comprises determining said at least one deblocking level as an absolute value of said deblocking filter delta divided by a scaling factor, said scaling factor depending on a quantization parameter.

14. The encoding method according to any one of claims 10 to 12, wherein, said information derived from said filtering with a deblocking filter being a deblocking filter mode, said determining (S3240) at least one deblocking level from said information comprises assigning deblocking levels to pixels depending on position of said pixels with respect to a boundary and on deblocking filter mode of said pixels.

15. The encoding method according to any one of claims 10 to 14, wherein said final weight is determined from both a horizontal deblocking level and a vertical deblocking level by:

- swapping said horizontal and vertical deblocking levels in the case where adaptive loop filtering transform is diagonal flip or rotation;
- multiplying each horizontal and vertical deblocking levels with a factor derived from adaptive loop filtering orientation of said current class to obtain modulated horizontal and vertical deblocking levels;
- multiplying each modulated horizontal and vertical deblocking levels with a factor derived from adaptive loop filtering activity of said current class to obtain new modulated horizontal and vertical deblocking levels;
- subtracting each new modulated horizontal and vertical deblocking levels from an offset value to obtain first and second weights; and
- multiplying said first and second weights to obtain a final weight.

16. The encoding method according to any one of claims 10 to 14, wherein said final weight is determined from both a horizontal deblocking level and a vertical deblocking level by:

- swapping said horizontal and vertical deblocking levels in the case where adaptive loop filtering transform is diagonal flip or rotation;
- multiplying each horizontal and vertical deblocking levels with a factor derived from adaptive loop filtering orientation of said current class to obtain modulated horizontal and vertical deblocking levels;
- adding said modulated horizontal and vertical deblocking levels to obtain a single deblocking level;
- multiplying said single deblocking level with a factor derived from adaptive loop filtering activity of said current class to obtain a new modulated deblocking level;
- subtracting said new modulated deblocking level from an offset value to obtain a final weight.

17. The encoding method according to any one of claims 10 to 14, wherein determining a weight (S3250) from said at least one deblocking level and further from said class to which said at least one sample belongs comprises:

- multiplying a single deblocking level with a factor derived from adaptive loop filtering orientation of said current class to obtain a modulated deblocking level;
- multiplying said modulated deblocking level with a factor derived from adaptive loop filtering activity of said current class to obtain new modulated deblocking level;
- subtracting said new modulated deblocking level from an offset value to obtain a final weight.

18. The encoding method according to any one of claims 10 to 17, wherein filtering (S250) said at least one sample F2 with an adaptive loop filter associated with the current class responsive to said final weight is as follows:

ALF(F2)*weight+F2*(1-weight)
where weight is said final weight.

19. A decoding device comprising:

- means for decoding a part of a picture;
- means for filtering the decoded picture part with a deblocking filter;
- means for classifying at least one sample of the filtered picture part into one of N classes of an adaptive loop filter, N being an integer;
- means for filtering said at least one sample with an adaptive loop filter associated with the class to which said at least one sample belongs, called current class, wherein filtering with an adaptive loop filter is weighted responsive to said current class and further to information derived from said filtering with a deblocking filter.

20. An encoding device comprising:

- means for encoding and for reconstructing a part of a picture ;
- means for filtering the reconstructed picture part with a deblocking filter;
- means for classifying at least one sample of the filtered picture part into one of N classes of an adaptive loop filter, N being an integer;
- means for filtering said at least one sample with an adaptive loop filter associated with the class to which said at least one sample belongs, called current class, wherein filtering with an adaptive loop filter is weighted responsive to said current class and further to information derived from said filtering with a deblocking filter.

1000

Processor — 1005

Memory 1030

Encoder — 1040

Power source 1020

1010

Communication Interface

FIGURE 1

110  125  130  145

Transform  Quantization  Entropy coding

Inverse
Quantization
140

Inverse
Transform
150  155

105

Intra prediction

170  160  165

Motion
Compensation

In-loop
Filter(s)

Motion
Estimation

Reference
Picture Buffer
175

180

100

FIGURE 2

19

FIGURE 3 – PRIOR ART

FIGURE 4– PRIOR ART

FIGURE 5 – PRIOR ART

EO_0  EO_90  EO_135  EO_45

FIGURE 6 – PRIOR ART

Starting band
position = 18

0 0 0 0 0 0 0 0 0 0 0 0 0 0 0 0 0 0 0 2 3 0 0 0 0 0 0 0 0 0 0 0

Lowest sample
value (e.g. 0)

Signals four band
offsets from starting
band position

largest sample
value (e.g. 255)

FIGURE 7 – PRIOR ART

input samples

ALF

S321

ALF
classification

class

S322

ALF filtering

filtered samples

FIGURE 8 – PRIOR ART

FIGURE 9

FIGURE 10

S100

Start

S110

accessing a part of a picture

S120

encoding and reconstructing the picture part

S130

filtering the reconstructed picture part with a deblocking filter

S140

classifying at least one sample of the filtered picture part into one class (named current class) of N ALF classes

S150

filtering the sample with an ALF filter associated with the current class, wherein said filtering with an ALF filter is weighted responsive to the current class and further to information derived from the filtering with a deblocking filter

S180

end

FIGURE 11

Input samples          Information from DBF

ALF

S321
ALF classification     class

S324
Determining weight

weight

S322'
ALF filtering

Output samples

FIGURE 12

ALF class S324 —

Information from DBF

S3240 —

Determining
deblocking level

deblocking level

S3250 —

Determining
weight

weight

FIGURE 13

Pixel positions relative to edge, on a raw, during horizontal filtering:

| p3 | p2 | p1 | p0 ] | q0 | q1 | q2 | q3 |
|---|---|---|---|---|---|---|---|

Levels for strong filtering:

| | S2 | S1 | S0 ] | S0 | S1 | S2 | |
|---|---|---|---|---|---|---|---|

For normal filtering (2-pixel) on both side:

| | | M1 | M0 ] | M0 | M1 | | |
|---|---|---|---|---|---|---|---|

For normal on a single side (can be flipped):

| | | N1 | N0 ] | W0 | | | |
|---|---|---|---|---|---|---|---|

For weak filtering (1-pixel) on both sides:

| | | | W0 ] | W0 | | | |
|---|---|---|---|---|---|---|---|

FIGURE 14

Levels for strong filtering:

| S1 | S0 ] | S0 | S1 |
|---|---|---|---|

For normal filtering (2-pixel) on both side:

| | M0 ] | M0 | |
|---|---|---|---|

For normal on a single side (can be flipped):

| | N0 ] | W0 | |
|---|---|---|---|

For weak filtering (1-pixel) on both sides:

| | W0 ] | W0 | |
|---|---|---|---|

FIGURE 15

S3250

| S3250-1 | Swap H/V deblocking levels if diagonal flip or rotation |
| S3250-2 | Modulate levels based on orientation |
| S3250-3 | Modulate levels based on activity |
| S3250-4 | Convert levels to weights |
| S3250-5 | Combine weights |

FIGURE 16

ALF class  S3250          dbl_1(H)    dbl_2(V)

S3250-1

transform          Swap

                          level 1      level 2

orientation   S3250-2

Orientation
factor          ⊗          ⊗

activity       S3250-3

Activity
factor          ⊗          ⊗

S3250-4          1 - x        1 - x

                    weight 1    weight 2

S3250-5          ⊗

weight

FIGURE 17

ALF class    3250    dbl_1(H)    dbl_2(V)

3250-1

transform

Swap

orientation    3250-2    level 1    level 2

Orientation
factor

3250-5

activity

Activity
factor    3250-3

3250-4

1 - x

weight

FIGURE 18

ALF class    3250    dbl

orientation    3250-2

Orientation
factor

activity    3250-3

Activity
factor

3250-4

1 - x

weight

FIGURE 19

FIGURE 20

FIGURE 21

S200

Start

S210

accessing a bitstream

S220

decoding a part of a picture

S230

filtering the decoded picture part with a deblocking filter

S240

classifying at least one sample of the filtered picture part into one class (named current class) of N ALF classes

filtering the sample with an ALF filter associated with the current class, wherein said filtering with an ALF filter is weighted responsive to the current class and further to information derived from the filtering with a deblocking filter

S250

S280

end

FIGURE 22

Europäisches
Patentamt

European
Patent Office

Office européen
des brevets

# EUROPEAN SEARCH REPORT

Application Number

EP 18 30 5145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/243104 A1 (CHEN QIAN [US] ET AL) 19 September 2013 (2013-09-19) | 1-3, 10-12, 19,20 | INV. H04N19/117 H04N19/157 H04N19/176 H04N19/82 |
| A | * paragraph [0023]; claim 1; figures 2, 3 * | 4-9, 13-18 | |
| X | WO 2013/053324 A1 (MEDIATEK INC [CN]; LEE KUN-BIN [CN]; CHEN YI-HAU [CN]; JU CHI-CHENG [C) 18 April 2013 (2013-04-18) | 1-3, 10-12, 19,20 | |
| A | * figures 8-11 * | 4-9, 13-18 | |

TECHNICAL FIELDS
SEARCHED    (IPC)

H04N

The present search report has been drawn up for all claims

| Place of search | Date of completion of the search | Examiner |
|---|---|---|
| Munich | 16 May 2018 | Oelbaum, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5145

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2018

| Patent document cited in search report | | Publication date | Patent family member(s) | | Publication date |
|---|---|---|---|---|---|
| US 2013243104 | A1 | 19-09-2013 | US 2013243104 A1<br>WO 2012071417 A1 | | 19-09-2013<br>31-05-2012 |
| WO 2013053324 | A1 | 18-04-2013 | CN 103891277 A<br>EP 2767089 A1<br>TW 201330629 A<br>US 2014269913 A1<br>WO 2013053324 A1 | | 25-06-2014<br>20-08-2014<br>16-07-2013<br>18-09-2014<br>18-04-2013 |

EPO FORM P0459

For more details about this annex : see Official Journal of the European Patent Office, No. 12/82